# EUROPÄISCHE PATENTSCHRIFT

(11) **EP 2 743 552 B1**
(45) Veröffentlichungstag und Bekanntmachung des Hinweises auf die Patenterteilung: **22.11.2017**
(21) Anmeldenummer: 13196229.2
(22) Anmeldetag: 09.12.2013
(51) Int. Cl.: F16K 31/02, F16K 49/00, F16K 31/00, G05D 23/02

(54) **Ventil**
Valve
Soupape

(30) Priorität: 14.12.2012 DE 102012223305; 18.12.2012 DE 102012223619
(43) Veröffentlichungstag der Anmeldung: 18.06.2014
(73) Patentinhaber: MAHLE Behr GmbH & Co. KG, 70469 Stuttgart (DE)
(72) Erfinder: Schäfer, Bernd, 70176 Stuttgart (DE); Behnert, Dominik, 70469 Stuttgart (DE); Pitz, Eric, 70199 Stuttgart (DE); Baumann, Tobias, 71720 Oberstenfeld (DE); Wesner, Markus, 70372 Stuttgart (DE)
(74) Vertreter: Grauel, Andreas

(56) Entgegenhaltungen:
- EP-A1- 1 302 711
- EP-A1- 2 239 486
- WO-A1-2010/069508
- DE-A1- 19 963 499
- US-A- 5 984 195

## Beschreibung

### Technisches Gebiet

Die Erfindung betrifft ein Ventil mit einem Gehäuse mit einem Fluideinlass und einem Fluidauslass, wobei der Fluideinlass mit dem Fluidauslass über eine Strömungskammer im Inneren des Gehäuses in Fluidkommunikation steht und der Fluiddurchsatz durch die Strömungskammer durch einen im Inneren des Gehäuses beweglich gelagerten Kolben beeinflussbar ist, wobei an einer ersten Angriffsfläche des Kolbens ein entlang seiner Hauptbewegungsrichtung wirkendes erstes Stellglied angreift und an einer zweiten Angriffsfläche des Kolbens ein entlang der Hauptbewegungsrichtung wirkendes zweites Stellglied angreift, wobei die Wirkrichtung des ersten Stellgliedes und die Wirkrichtung des zweiten Stellgliedes entgegengesetzt sind, und wobei das erste Stellglied aus einer Form-Gedächtnis-Legierung gebildet ist.

### Stand der Technik

Zur Beeinflussung von Massenströmen, insbesondere in Kühlmittelkreisläufen, werden Ventile eingesetzt, die abhängig von Einflussgrößen ein Stellglied im Ventil beeinflussen und dadurch den Massenstrom durch das Ventil vergrößern oder verkleinern.

Hierzu sind im Stand der Technik Lösungen bekannt, bei welchen zur Beeinflussung des Kühlmittelstromes Magnetventile eingesetzt werden. Durch das Bestromen eines Elektromagneten wird in einem Magnetventil ein Kolben bewegt. Dieser gibt dabei eine oder mehrere Öffnungen frei, durch welche beispielsweise ein Kühlmittel strömen kann. Das Signal zum Betätigen des Magnetventils kann dabei beispielsweise von einem Steuergerät ausgegeben werden.

Nachteilig an Magnetventilen ist, dass sie aufgrund des Elektromagneten schwer sind und außerdem aus einer Vielzahl von Einzelkomponenten aufgebaut sind.

Alternativ dazu sind Lösungen bekannt, bei welchen der Kolben durch ein Stellglied verstellt wird, wobei das Stellglied aus einer Form-Gedächtnis-Legierung besteht. Formgedächtnislegierungen weisen im Vergleich zu anderen Aktorprinzipien mit Abstand das größte spezifische Arbeitsvermögen (Verhältnis von geleisteter Arbeit zu Werkstoffvolumen) auf. Dadurch ist eine sehr kompakte Bauweise möglich bei gleichzeitig hohen Stellkräften.

So offenbart die WO 2008/028559 A2 ein thermostatisches Ventil zur Regelung eines Massenstroms, wobei ein Kolben im Inneren eines Ventilkörpers durch eine Feder aus einer Form-Gedächtnis-Legierung verstellt werden kann. Das Fluid, welches die Form-Gedächtnis-Legierungsfeder umströmt und das Fluid, dessen Massenstrom durch das Ventil geregelt werden soll, sind dabei identisch.

Abhängig von dem jeweiligen Temperaturniveau des Fluids dehnt sich die Form-Gedächtnis-Legierungsfeder aus oder zieht sich zusammen. Der Kolben ist dabei an einer ersten Seite von einer Form-Gedächtnis-Legierungsfeder beaufschlagt und er wird an einer dieser ersten Seite im Wesentlichen gegenüberliegenden zweiten Seite von einer konventionellen Feder beaufschlagt. Die konventionelle Feder übt eine Federkraft auf den Kolben aus, welche der Federkraft der Form-Gedächtnis-Legierungsfeder entgegengerichtet ist.

Im Falle einer Ausdehnung der Form-Gedächtnis-Legierungsfeder wird die konventionelle Feder komprimiert. Im Falle des Zusammenziehens der Form-Gedächtnis-Legierungsfeder, dehnt sich die konventionelle Feder aus. Der Kolben wird so zwischen der konventionellen und im Wesentlichen temperaturunabhängigen Feder und der temperaturabhängigen Form-Gedächtnis-Legierungsfeder geführt.

Die WO 2009/124766 A2 offenbart eine thermostatische Regeleinrichtung, bei der ebenfalls ein Kolben innerhalb eines Gehäuses zwischen einer Form-Gedächtnis-Legierungsfeder und einer konventionellen Feder beweglich angeordnet ist.

Nachteilig an den Vorrichtungen gemäß dem Stand der Technik ist, dass die Formänderung der Form-Gedächtnis-Legierungsfeder entweder direkt durch das Temperaturniveau des zu regelnden Fluids oder durch das Temperaturniveau eines Umgebungsmediums beeinflusst wird. Sowohl das Temperaturniveau des Fluids als auch das Temperaturniveau des Umgebungsmediums sind dabei jedoch schwer zu kontrollieren. Eine präzise Ansteuerung des Ventils ist daher nicht in ausreichendem Maße möglich.

Ventile dieser Art sind auch aus den Druckschriften EP 2239486, EP 1302711, US 5984195, DE 19963499 und WO 2010069508 bekannt.

### Darstellung der Erfindung, Aufgabe, Lösung, Vorteile

Daher ist es die Aufgabe der vorliegenden Erfindung ein Ventil bereitzustellen, welches einen Massenstrom eines Fluids aufgrund von definierten von außen eingegeben Einflussgrößen regeln kann und dabei einen einfachen und kostengünstigen Aufbau aufweist.

Die Aufgabe der vorliegenden Erfindung wird durch ein Ventil mit den Merkmalen gemäß Anspruch 1 gelöst.

Ein Ausführungsbeispiel der Erfindung betrifft ein Ventil mit einem Gehäuse mit einem Fluideinlass und einem Fluidauslass, wobei der Fluideinlass mit dem Fluidauslass über eine Strömungskammer im Inneren des Gehäuses in Fluidkommunikation steht und der Fluiddurchsatz durch die Strömungskammer durch einen im Inneren des Gehäuses beweglich gelagerten Kolben beeinflussbar ist, wobei an einer ersten Angriffsfläche des Kolbens ein entlang seiner Hauptbewegungsrichtung wirkendes erstes Stellglied angreift und an einer zweiten Angriffsfläche des Kolbens ein entlang der Hauptbewegungsrichtung wirkendes zweites Stellglied angreift, wobei die Wirkrichtung des ersten Stellgliedes und die Wirkrichtung des zweiten Stellgliedes entgegengesetzt sind und das erste Stellglied aus einer Form-Gedächtnis-Legierung gebildet ist, wobei das Gehäuse ein erstes Heizelement aufweist, welches im Bereich des ersten Stellgliedes im und/oder am Gehäuse angeordnet ist und das erste Stellglied durch das Heizelement erwärmbar ist, dadurch gekennzeichnet, dass das Heizelement ein PTC-Heizelement ist und das PTC-Heizelement eine maximale Leistung > 20 Watt besitzt, wobei bei Temperaturen oberhalb der Phasenumwandlungstemperatur der Widerstand stark erhöht ist und bei Temperaturen > 120 °C keine Wärme mehr an das erste Stellglied abgebbar ist.

Der Kolben, an welchem das erste und das zweite Stellglied angreifen, ist im Inneren des Gehäuses beweglich gelagert. Er kann vorteilhafterweise entlang einer Hauptbewegungsrichtung innerhalb des Gehäuses verschoben werden. Das erste und das zweite Stellglied wirken dabei vorzugsweise in zueinander entgegengesetzten Wirkungsrichtungen auf den Kolben ein. Die Stellkräfte der beiden Stellglieder sind daher vorteilhafterweise derart abgestimmt, dass unter Ausnutzung des Formänderungseffektes der Form-Gedächtnis-Legierung des ersten Stellgliedes eine Verschiebung des Kolbens gegenüber dem zweiten Stellglied möglich ist.

Der Kolben ist dabei so im Gehäuse gelagert, dass er zumindest im Wesentlichen fluiddicht mit diesem abschließt. Ein ungewolltes Umströmen des Kolbens mit dem Fluid, welches durch die Strömungskammer strömt wird dadurch verhindert.

Durch den Kolben kann der Fluiddurchsatz vom Fluideingang zum Fluidausgang gesteuert oder reguliert werden. Die Anzahl der Fluideingänge und Fluidausgänge ist dabei nicht limitiert.

Das erste Stellglied, welches aus einer Form-Gedächtnis-Legierung gebildet ist wird vorteilhafterweise in thermischen Kontakt mit einem Heizelement gebracht. Über dieses Heizelement kann dann der Formänderungseffekt gezielt aktiviert werden. Durch das Zuführen von Wärme kann das erste Stellglied in einen definierten Hochtemperaturzustand überführt werden. Durch das Abschalten der Wärmezufuhr kann das erste Stellglied wieder in einen definierten Niedertemperaturzustand zurück überführt werden. Das zweite Stellglied dient der Rückführung in den Ausgangszustand beziehungsweise kann bei der Rückführung in den Ausgangszustand vorteilhafterweise unterstützen, indem es eine Kraft auf das erste Stellglied ausübt, die der Kraft des ersten Stellgliedes, welche durch die Erwärmung erzeugt wurde, entgegengesetzt ist.

Mit Hochtemperatur- und Niedertemperaturniveau sind hier relative Temperaturniveaus gemeint, die abhängig sind von den Eigenschaften des gewählten Form-Gedächtnis-Materials. Das Hochtemperaturniveau bezieht sich auf den Formzustand der Form-Gedächtnis-Legierung im relativ zum zweiten Temperaturniveau höheren Temperaturbereich. Das Niedertemperaturniveau entsprechend auf den niederen Temperaturbereich.

Ein bevorzugtes Ausführungsbeispiel ist dadurch gekennzeichnet, dass das erste Stellglied bei einer Erwärmung des Heizelementes in seiner Wirkrichtung ausdehnbar oder verkürzbar ist.

Vorteilhafterweise wird die Formänderung der Form-Gedächtnis-Legierung durch ein ansteuerbares Heizelement ausgelöst. Auf diese Weise ist die Formänderung gezielt von außen hervorrufbar, wodurch eine aktive Steuerung des Ventils ermöglicht wird. Dies ist insbesondere vorteilhaft, da die Formänderung des ersten Stellgliedes damit nicht vom Temperaturniveau des Fluids, welches das Ventil durchströmt, abhängig ist. Das Temperaturniveau liegt bei der Formänderung oberhalb des Temperatureinsatzbereichs des Ventils beziehungsweise oberhalb der möglicherweise auftretenden maximalen Umgebungstemperaturen.

Auch ist es zu bevorzugen, wenn die erste Angriffsfläche und die zweite Angriffsfläche an gegenüberliegenden Seiten des Kolbens angeordnet sind.

Durch eine Anordnung der Angriffsflächen an gegenüberliegenden Seiten ist es besonders einfach, die beiden Stellglieder so im Ventil zu positionieren, dass deren jeweilige Wirkrichtungen entgegengesetzt zueinander sind. Dadurch können sie so auf den Kolben einwirken, dass dieser entlang einer Hauptbewegungsrichtung bewegt werden kann.

Im einfachsten Fall führt der Kolben innerhalb des Gehäuses eine translatorische Bewegung aus, durch welche ein Strömungsweg vom Fluideinlass zum Fluidauslass im Inneren des Ventils beeinflusst wird. Der Fluiddurchsatz ist dadurch von einer Null-Stellung, in der kein Fluid strömt, zu einer vollständig geöffneten Stellung variabel einstellbar.

In einer besonders günstigen Ausgestaltung der Erfindung ist es außerdem vorgesehen, dass der Fluiddurchsatz durch die Strömungskammer durch ein Ausdehnen oder Verkürzen des ersten Stellgliedes in seiner Wirkrichtung verringerbar ist.

Das erste Stellglied ist dabei so im Ventil angeordnet, dass durch eine Ausdehnung des ersten Stellgliedes ein Schließen des Ventils erreicht wird. Durch eine Ausdehnung des ersten Stellgliedes wird die Kraft auf den Kolben, die gegen das zweite Stellglied wirkt erhöht, wodurch der Kolben verschoben wird. Die Wirkrichtung des ersten Stellgliedes ist dabei derart, dass der Fluiddurchsatz durch eine Ausdehnung des ersten Stellgliedes reduziert wird.

Dies ist besonders vorteilhaft, da das Ventil so grundsätzlich geöffnet ist. Oft wird durch das Erwärmen einer Form-Gedächtnis-Legierung erreicht, dass sich eine Ausdehnung ergibt. Das Ventil wird folglich nur geschlossen werden, wenn das erste Stellglied über das Heizelement erwärmt wird. Für den Fall einer Fehlfunktion des Heizelementes bleibt das Ventil geöffnet. Dies ist insbesondere für Anwendungen vorteilhaft, bei denen ein geöffnetes Ventil einen sicheren Zustand darstellt, der einem geschlossenen Ventil vorzuziehen ist. Bei einem Ausfall des Heizelementes bleibt das Ventil aufgrund der Anordnung geöffnet.

In einer alternativen Ausgestaltung der Erfindung, kann es vorgesehen sein, dass der Fluiddurchsatz durch die Strömungskammer durch ein Ausdehnen oder ein Verkürzen des ersten Stellgliedes in seiner Wirkrichtung erhöhbar ist.

Dies kann zum Beispiel dadurch erreicht werden, dass sich das erste Stellglied beim Übergang von der Niedertemperatur in die Hochtemperaturphase verkürzt.

Durch eine entsprechende Anordnung des ersten Stellgliedes im Ventil kann erreicht werden, dass das Ventil grundsätzlich geschlossen ist und nur durch eine aktive Formänderung des ersten Stellgliedes geöffnet werden kann. Dies ist insbesondere vorteilhaft für Anwendungsfälle, bei denen ein geschlossenes Ventil einen, im Vergleich zum geöffneten Ventil, sichereren Zustand darstellt.

Form-Gedächtnis-Legierungen können durch Wärmezufuhr sowohl eine Ausdehnung als auch eine Stauchung erfahren. Vorzugsweise wird durch das Erwärmen eine Ausdehnung der Form-Gedächtnis-Legierung erreicht.

Gemäß einer besonders bevorzugten Weiterbildung der Erfindung kann es vorgesehen sein, dass der Kolben den Fluiddurchsatz durch die Strömungskammer in einer Position vollständig verhindert.

In dieser Position verschließt der Kolben die Strömungskammer vollständig und unterbindet so eine Fluidströmung vom Fluideinlass zum Fluidauslass. Der Fluidkreislauf durch das Ventil wird dabei vollständig unterbrochen. Der Kolben kann dabei wahlweise den Fluidauslass und/oder den Fluideinlass blockieren.

Die Ausbildung des Heizelementes durch ein PTC-Heizelement ist besonders vorteilhaft, da PTC-Heizelemente kostengünstige Bauteile sind, die in großen Stückzahlen zu beziehen sind. Weiterhin lassen sich PTC-Heizelemente besonders einfach regeln, so dass die abgegebene Wärmemenge sehr gut kontrollierbar ist. Über eine entsprechende Abstimmung der Regelung beziehungsweise Steuerung des PTC-Elementes kann eine Überhitzung des Ventils beziehungsweise der Form-Gedächtnis-Legierung vermieden werden.

Auch kann es zweckmäßig sein, wenn das erste Stellglied und/oder das zweite Stellglied ein Kraftspeicherelement ist.

Als erstes und/oder als zweites Stellglied kann jeweils ein Kraftspeicherelement eingesetzt werden. Dabei sind insbesondere Federn und im Speziellen Spiralfedern vorteilhaft.

Spiralfedern lassen sich leicht in das Ventil integrieren und sind einfach herstellbar. Durch das Aufwickeln der Form-Gedächtnis-Legierung zu einer Spiralfeder lassen sich außerdem besonders vorteilhaft auf kleinem Raum große Kräfte infolge einer Formänderung erzeugen. Dies verbessert die Funktionalität des Ventils.

Vorteilhafte Weiterbildungen der vorliegenden Erfindung sind in den Unteransprüchen und der nachfolgenden Figurenbeschreibung beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:
- Fig. 1: eine Prinzipskizze eines Ventils mit einem innenliegenden Kolben, der eine Fluidströmung durch das Ventil beeinflusst, wobei der Kolben durch eine konventionelle Feder und eine Feder aus einer Form-Gedächtnis-Legierung im Inneren des Gehäuses bewegt wird,
- Fig. 2: eine Prinzipskizze eines erfindungsgemäßen Ventils, mit einem Heizelement im Zentrum einer Form-Gedächtnis-Legierungsfeder, wobei der Kolben an zwei sich gegenüberliegenden Angriffsflächen mit einer konventionellen Feder und einer Form-Gedächtnis-Legierungsfeder in Kontakt steht,
- Fig.3: eine Prinzipskizze einer alternativen Ausführung eines erfindungsgemäßen Ventils, wobei die Form-Gedächtnis-Legierungsfeder und das Heizelement im Vergleich zur Figur 2 auf der entgegengesetzten Seite des Kolbens angeordnet sind, und
- Fig. 4: eine Ansicht eines Ventils gemäß der Figur 2, wobei es sich bei der Darstellung um eine technische Zeichnung handelt.

### Bevorzugte Ausführung der Erfindung

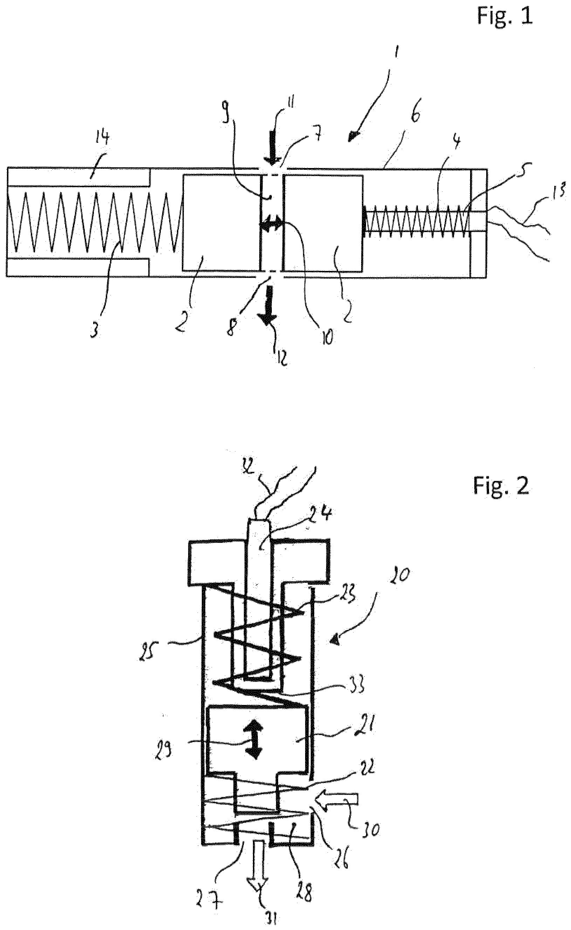

Die Figur 1 zeigt eine Prinzipskizze eines Ventils 1, welches im Wesentlichen aus einem Gehäuse 6 und einem darin beweglich gelagerten Kolben 2 besteht. Das Gehäuse 6 weist einen Fluideinlass 7 sowie einen Fluidauslass 8 auf. Der Kolben 2 ist entlang seiner Hauptbewegungsrichtung 10 innerhalb des Gehäuses 6 beweglich gelagert. Der Fluideinlass 7 steht mit dem Fluidauslass 8 über die Strömungskammer 9 im Inneren des Gehäuses 6 in Fluidkommunikation.

Die Strömungskammer 9 kann durch ein entlang der Hauptbewegungsrichtung 10 stattfindendes Verschieben des Kolbens 2 vergrößert und verkleinert werden. In einer der möglichen Endlagen des Kolbens 2 ist die Fluidkommunikation zwischen dem Fluideinlass 7 und dem Fluidauslass 8 gänzlich unterbunden. Das durch den Fluideinlass 7 einströmende Fluid 11 kann dann nicht mehr durch das Innere des Gehäuses 6 strömen und über den Fluidauslass 8 entsprechend dem Pfeil mit dem Bezugszeichen 12 aus dem Gehäuse 6 ausströmen.

Der Kolben 2 steht im Inneren des Gehäuses mit einer konventionellen Spiralfeder 3 in Kontakt, welche den Kolben zur linken Seite gegen das Gehäuse 6 abstützt. Zur rechten Seite ist der Kolben 2 über eine weitere Spiralfeder 4, welche aus einer Form-Gedächtnis-Legierung hergestellt ist, abgestützt. Im Zentrum der Form-Gedächtnis-Legierungsfeder 4 ist ein Heizelement 5 angeordnet, welches über elektrische Kontaktierungen 13 bestromt werden kann.

Das Heizelement 5 kann in vorteilhaften Ausführungsformen beispielsweise ein PTC-Heizelement sein. Durch ein Bestromen des Heizelementes 5 wird die Form-Gedächtnis-Legierungsfeder 4 erwärmt.

Form-Gedächtnis-Legierungen weisen in der Regel zwei Formzustände auf, welche unterschiedlichen Temperaturniveaus zugeordnet sind. Durch ein Zuführen von Wärmeenergie oder ein Abkühlen der Form-Gedächtnis-Legierung wechselt diese zwischen dem Formzustand des kälteren Temperaturniveaus und dem Formzustand des höheren Temperaturniveaus. Dies kann entweder ohne eine Krafteinwirkung von außen erfolgen oder mit einer äußeren Krafteinwirkung.

Die konventionelle Spiralfeder 3 und die Form-Gedächtnis-Legierungsfeder 4 sind dabei so abgestimmt, dass im Wesentlichen ein Ungleichgewicht zwischen den Federkräften herrscht. Durch das Überwiegen der Kraftkomponente der konventionellen Feder 3 oder der Form-Gedächtnis-Legierungsfeder 4 kann der Kolben 2 im Inneren des Gehäuses 6 verschoben werden.

Wird der Form-Gedächtnis-Legierungsfeder 4 nun Wärme über das Heizelement 5 zugeführt, dehnt sich diese aus, wodurch die Kraftkomponente der Feder auf die eine Angriffsfläche des Kolbens 2 erhöht wird. Durch die stärkere Kraft infolge der Formänderung der Form-Gedächtnis-Legierungsfeder 4 auf den Kolben 2 wird die konventionelle Feder 3 von dem Kolben 2 zusammengedrückt. Der Kolben 2 wird somit innerhalb des Gehäuses 6 nach links verschoben. Durch diese Verschiebung des Kolbens 2 wird die Strömungskammer 9 ebenfalls verschoben, wodurch der Öffnungsquerschnitt der Strömungskammer 9 verkleinert wird.

Durch das Verschieben des Kolbens 2 kann so der Fluiddurchsatz durch die Strömungskammer 9 reguliert werden. Im Inneren des Gehäuses 6 sind Anschläge 14 vorgesehen, welche eine maximal mögliche Verschiebung des Kolbens 2 definieren.

Um den Kolben 2 wieder nach rechts innerhalb des Gehäuses 6 verschieben zu können, wird die Bestromung des Heizelementes 5 unterbrochen werden, wodurch sich die Form-Gedächtnis-Legierungsfeder 4 abkühlt. Durch die Feder 3, welche durch die vorangegangene Verschiebung des Kolbens 2 komprimiert wurde, wirkt nun auf den Kolben eine nach rechts gerichtete Rückstellkraft. Mit zunehmender Abkühlung der Form-Gedächtnis-Legierungsfeder 4 wird der Kolben 2 aufgrund der in der konventionellen Feder 3 gespeicherten Energie wieder zurück nach rechts geschoben.

Die Strömungskammer 9, über welche der Fluideinlass 7 mit dem Fluidauslass 8 in Fluidkommunikation steht, wandert dementsprechend mit zur rechten Seite wodurch der Öffnungsquerschnitt des Fluideinlasses 7 und/oder des Fluidauslasses 8 in die Strömungskammer 9 vergrößert wird. In der rechten Verschiebeendposition des Kolbens 2, ist das Ventil beziehungsweise der Fluideinlass 7 und Fluidauslass 8 vollständig geöffnet.

Das in Figur 1 gezeigte Ventil 1 ist so ausgelegt, dass beim Ausfall der Bestromung des Heizelementes 5 das Ventil 1 geöffnet wird. Da sich die Form-Gedächtnis-Legierungsfeder 4 abkühlt und aufgrund der in der konventionellen Feder 3 gespeicherten Energie der Kolben nach rechts gedrückt wird, wird dabei die Form-Gedächtnis-Legierungsfeder 4 komprimiert. Durch die Verschiebung des Kolbens wird das Ventil 1 geöffnet.

Der in Figur 1 gezeigte Zustand entspricht dem unbestromten Zustand. Das Heizelement 5 bildet gleichzeitig den rechten Anschlag für die Kolben 2. Durch eine Ausdehnung der Form-Gedächtnis-Legierungsfeder 4 infolge einer Erwärmung des Heizelementes 5 werden die Kolben 2 nach links verschoben. Dies geschieht solange, bis die Kolben 2 am Anschlag 14 zum Anliegen kommen. Aufgrund der Dimensionierung des Anschlags 14 und der Kolben 2 im Verhältnis zur Positionierung des Fluideinlasses 7 und des Fluidauslasses 8 kommt es zum Verschließen der Strömungskammer 9.

Je nach Dimensionierung und Positionierung der konventionellen Feder 3 und der Form-Gedächtnis-Legierungsfeder 4, beziehungsweise durch geringfügige konstruktive Änderungen kann das Ventil auch so ausgelegt werden, dass es beim Ausbleiben einer Bestromung stets geschlossen ist. Dies ist weiterhin auch davon abhängig, welcher Formzustand der Form-Gedächtnis-Legierung abhängig vom anliegenden Temperaturniveau zugewiesen wurde.

Die Figur 2 zeigt eine Prinzipskizze eines Ventils 20, das ebenfalls im Wesentlichen aus einem Gehäuse 25 und einem darin entlang seiner Hauptbewegungsrichtung 29 beweglichen Kolben 21 gebildet ist. Im oberen Bereich des Ventils ist eine Form-Gedächtnis-Legierungsfeder 23 angeordnet, welche zwischen einer Angriffsfläche an dem Kolben 21 und dem Gehäuse 25 abgestützt ist. Im Zentrum der Form-Gedächtnis-Legierungsfeder 23 ist ein Heizelement 24 vorgesehen, welches über elektrische Leitungen 32 bestromt werden kann. Im unteren Teil des Ventils 20 ist eine konventionelle Spiralfeder 22 vorgesehen, welche den Kolben 21 nach unten hin abstützt.

In Figur 2 ist das Heizelement 24 bestromt, so dass sich die Form-Gedächtnis-Legierungsfeder 23 ausdehnt. Der Kolben 21 wird daher nach unten verschoben. In einem nicht bestromten Zustand ist das Ventil 20 der Figur 2 stets geöffnet, da die Federkraft der Feder 22 die Form-Gedächtnis-Legierungsfeder 23 komprimiert und den Kolben 21 gegen den Anschlag 33 drückt.

Das Ventil 20 weist einen Fluideinlass 26 sowie einen Fluidauslass 27 auf. Diese stehen über eine Strömungskammer 28 miteinander in Fluidkommunikation. Die Größe der Strömungskammer 28 wird durch die Position des Kolbens 21 mitbestimmt. Ebenso wird der Fluiddurchsatz durch die Strömungskammer 28 durch die Position des Kolbens 21 mitbestimmt.

Über den Fluideinlass 26 kann ein Fluid 30 in das Ventil 20 einströmen und über den Fluidauslass 27 kann das Fluid entlang des Pfeils 31 aus dem Ventil 20 ausströmen.

Zwischen der konventionellen Feder 22 und der Form-Gedächtnis-Legierungsfeder 23 herrscht ebenso ein Kräfteungleichgewicht wie bereits in Figur 1 beschrieben. Die Veränderung der Position des Kolbens 21 geschieht ebenfalls durch Bestromung des Heizelementes, wodurch sich die Form-Gedächtnis-Legierungsfeder 23 ausdehnt und die konventionelle Feder 22 komprimiert wird. Der Rücktransport des Kolbens erfolgt durch ein Abkühlen der Form-Gedächtnis-Legierungsfeder 23 und durch ein Ausdehnen der konventionellen Feder 22.

In einer Position, bei der die Form-Gedächtnis-Legierungsfeder 23 ihre maximale Ausdehnung aufweist und die konventionelle Feder ihre maximale Stauchung aufweist, verschließt der Kolben 21 das Ventil 20 vollständig und unterbindet einen Fluidstrom durch das Ventil 20.

Der Kolben 21 ist dabei vorteilhafterweise mit einem an das Innere des Gehäuses angepassten Querschnitt versehen, so dass dieser, vorzugsweise fluiddicht, innerhalb des Gehäuses gelagert werden kann und entlang der Innenwandung des Gehäuses beweglich ist.

Um den Fluidauslass 27 ist im Inneren des Ventils 20 ein Ventilsitz gebildet, welcher passgenau von dem Kolben 21 verschlossen werden kann.

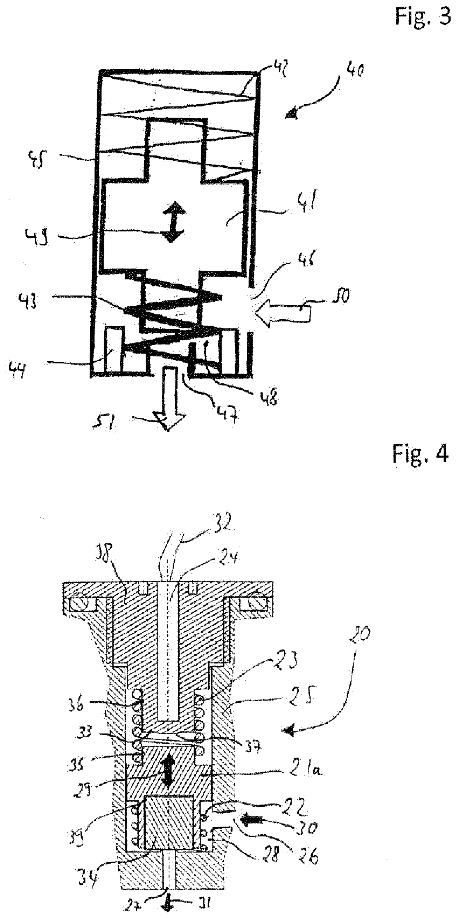

Die Figur 3 zeigt eine alternative Ausführungsform eines Ventils 40, wobei wieder im Inneren des Gehäuses 45 ein Kolben 41 zwischen einer konventionellen Feder 42 und einer Form-Gedächtnis-Legierungsfeder 43 beweglich gelagert ist.

Abweichend zu den Figuren 1 und 2 ist nun die Form-Gedächtnis-Legierungsfeder 43 in dem von dem fluiddurchströmten Bereich des Ventils 40 angeordnet.

Die konventionelle Spiralfeder 42 ist im oberen Bereich des Ventils 40 angeordnet und stützt sich auf der einen Seite an der Gehäuseinnenwand und auf der anderen Seite am Kolben 41 ab.

Die Form-Gedächtnis-Legierungsfeder 43 stützt sich an der unteren Innenwandung des Ventils 40 ab und ebenfalls am Kolben 41. Das Gehäuse 45 weist einen Fluideinlass 46 sowie einen Fluidauslass 47 auf. Fluideinlass und Fluidauslass 46, 47 stehen über die Strömungskammer 48 miteinander in Fluidkommunikation. Ein Fluid kann entlang des Pfeils 50 in das Ventil 40 einströmen und nach dem Durchströmen der Strömungskammer 48 entlang des Pfeils 51 aus dem Ventil 40 ausströmen.

Die Größe der Strömungskammer 48 wird, wie auch in den beiden vorausgegangenen Figuren, durch die Lage des Kolbens bestimmt. Entlang seiner Hauptbewegungsrichtung 49 kann der Kolben 41 im Gehäuse 45 nach oben oder nach unten bewegt werden.

Im Unterschied zu den Figuren 1 und 2 ist nun das Heizelement 44 nicht im Zentrum der Form-Gedächtnis-Legierungsfeder 43 angeordnet, sondern umschließt diese entlang ihres Umfangs. Über das Heizelement kann die Form-Gedächtnis-Legierungsfeder 43 ebenfalls erwärmt werden, wodurch sie sich ausdehnt und den Kolben nach oben verschiebt und gleichzeitig die konventionelle Spiralfeder 42 komprimiert.

Im Unterschied zu den Figuren 1 und 2 ist die Form-Gedächtnis-Legierungsfeder 43 nun direkt dem Fluid ausgesetzt, welches das Ventil 40 durchströmt. Das heißt, die Form-Gedächtnis-Legierungsfeder 43 wird zusätzlich von dem das Ventil 40 durchströmenden Fluid abgekühlt oder erwärmt. Diese zusätzliche Temperierung der Form-Gedächtnis-Legierungsfeder 43 muss bei der Auslegung des Ventils 40 beachtet werden, um die entgegengesetzt wirkenden Federkräfte der konventionellen Feder 42 und der Form-Gedächtnis-Legierungsfeder 43 so auslegen zu können, dass aufgrund der Formänderung der Form-Gedächtnis-Legierungsfeder 43 ein Verschiebend des Kolbens möglich bleibt.

Weiterhin ist bei dem Ausführungsbeispiel der Figur 3 zu beachten, dass die elektrische Kontaktierung des Heizelementes 44 in einem von einem fluiddurchströmten Umfeld stattfinden muss. Es gelten daher besondere Anforderungen an die Isolierung und die Abdichtung der Durchtrittsstellen der Leitungen in das Gehäuse 45.

Bei einem Ausfall der Bestromung des Heizelementes 44 wird das Ventil 40 aufgrund der Federkraft der konventionellen Spiralfeder 42 verschlossen. Der durch das Ventil 40 verlaufende Fluidkreislauf wird damit unterbrochen. Für den Fall, dass sich das in das Ventil 40 einströmende Fluid stark erwärmt und dadurch eine Formzustandsänderung der Form-Gedächtnis-Legierungsfeder 43 erreicht wird, kann es sein, dass auch unabhängig von der Bestromung des Heizelementes 44 eine Öffnung des Ventils 40 stattfindet. Die relevanten Temperaturbereiche des Fluids sind daher bei der Auslegung des Ventils 40 und insbesondere bei der Auswahl der Form-Gedächtnis-Legierungsfeder 43 zu berücksichtigen.

Die Figur 4 zeigt ein Ventil 20 entsprechend dem Ventil 20 der Figur 2. Für identische Elemente stimmen die Bezugszeichen der beiden Figuren überein, wobei die Darstellung der Figur 4 um weitere Bezugszeichen ergänzt wurde.

In einer Weiterbildung zu der Figur 2 weist der Kolben 21a der Figur 4 einen Absatz 35 auf, der sich an der oberen Seite des Kolbens 21a anschließt. Die Form-Gedächtnis-Legierungsfeder 23 umfasst in der Ausführungsform der Figur 4 zumindest teilweise sowohl den Absatz 36 des Gehäuseteils 38 als auch den Absatz 35 des Kolbens 21a. Im Unterschied zur Figur 2 liegt die Form-Gedächtnis-Legierungsfeder 23 damit nicht nur an einer Kontaktfläche des Kolbens 21 an, sondern umfasst einen Teil des Kolbens 21a. Dadurch ist ein sicherer Sitz der Form-Gedächtnis-Legierungsfeder 23 am Kolben 21a und am Gehäuseteil 38 gewährleistet.

Zusätzlich weist der Kolben 21a am unteren, dem Fluidauslass 27 zugewandten, Endbereich eine Aussparung 39 auf. Die Aussparung 39 ist fünfseitig geschlossen und einseitig offen ausgeführt, wobei die offene Seite hin zum Fluidauslass 27 gerichtet ist. In diese Aussparung 39 ist ein Passstück 34 eingesetzt, welches den Kolben 21a nach unten hin abschließt. Über das Passstück 34 kann insbesondere ein fluiddichtes Verschließen des Fluidauslasses 27 erreicht werden. Dazu kann das Passstück beispielsweise eine geeignete Formgebung aufweisen, die dem Fluidauslass 27 angepasst ist. Auch kann es vorgesehen werden, dass das Passstück 34 aus einem vom Rest des Kolbens 21a abweichenden Material ausgeführt wird, wodurch beispielsweise eine größere Dichtwirkung erreicht werden kann.

Der Kolben 21a der Figur 4 weist damit einen mittleren Bereich auf, welcher dem Innenquerschnitt des Gehäuses 25 im Wesentlichen entspricht, so dass er derart im Gehäuse angeordnet werden kann, dass kein Fluid um ihn herum strömbar ist. Nach oben hin weist der Kolben 21a den Absatz 35 auf, welcher einen geringeren Außendurchmesser aufweist, als der mittlere Bereich. Nach unten hin weist der Kolben 21a einen unteren Bereich auf, welcher die Aussparung 39 aufweist und ebenfalls einen geringeren Außendurchmesser als der mittlere Bereich aufweist.

In der Figur 4 ist der Fluidauslass 27 derart ausgeführt, dass der Kanal, welcher den Fluidauslass 27 bildet einen kleinen Überstand über das Gehäuse 25 nach innen in die Strömungskammer 28 hinein bildet. Auf diesem Überstand kommt der Kolben 21a mit seinem Passstück 34 zu liegen, wenn der Fluidauslass 27 verschlossen wird.

Der dem Kolben 21a zugewandte Anschlag 33 des Gehäuseteils 38 weist einen Überstand 37 auf, welcher die eigentliche Anschlagsfläche für den Kolben 21a bildet.

Der Überstand 37 führt dabei dazu, dass der Kolbens 21a in seiner oberen Endposition nicht vollflächig am Anschlag 33 anliegt. Dadurch wird der ungewollte Abtransport von Wärme, die durch das Heizelement 24 erzeugt werden kann, aus dem Gehäuseteil 38 verhindert, indem die Wärmeübertragungsfläche zwischen dem Gehäuseteil 38 und dem Kolben 21a möglichst minimal gehalten wird.

Die konventionelle Feder 22 ist im Ausführungsbeispiel der Figur 4 an den Außenflächen des unteren Teils des Kolbens 21a angelegt, wodurch ein sicherer Halt der Feder 22 am Kolben 21a gewährleistet ist.

Zwischen dem Gehäuse 25 und dem Gehäuseteil 38 sind Dichtungsmittel vorgesehen, über die eine fluiddichte Verbindung erzeugt wird.

Die in den Figuren 1 bis 4 gezeigten Darstellungen für Ventile sind als beispielhaft zu verstehen. Ebenso die Formgebung der Kolben innerhalb der Ventile. Abweichend zu den gezeigten Spiralfedern können beispielsweise auch Tellerfedern oder andere Federelemente verwendet werden.

Grundsätzlich sind die Kolben im Inneren der Gehäuse so zu gestalten, dass ein möglichst passgenauer Sitz des Kolbens im Gehäuse gewährleistet ist, welcher möglichst Leckageströmungen zwischen dem Kolben und dem Gehäuse verhindert. Ebenso ist vorteilhafterweise der Kolben so zu gestalten, dass er zumindest eine der Öffnungen des Fluideinlasses oder Fluidauslasses sicher fluiddicht verschließen kann. Darüber hinaus ist es vorteilhaft, wenn der Kolben eine Geometrie aufweist, in welche die Federelemente sicher eingreifen können, damit die Kraftübertragung zwischen den Federelementen, welche als Stellglieder fungieren, und dem Kolben gewährleistet ist.

Die Form-Gedächtnis-Legierungen können sich durch Wärme entweder ausdehnen oder zusammenziehen. Dies ist abhängig davon, welche Formzustände der Form-Gedächtnis-Legierung im Produktionsprozess "antrainiert" worden sind. Die Ausführungsbeispiele der Figuren 1 bis 4 zeigen jeweils Form-Gedächtnis-Legierungsfedern, bei denen sich die Form-Gedächtnis-Legierung unter Wärmezufuhr ausdehnt. Dies hat jedoch keinen einschränkenden Charakter. Ventile mit einer umgekehrten Reaktion der Form-Gedächtnis-Legierungen auf Wärmezufuhr sind ebenso vorsehbar.

Üblicherweise findet die Formänderung der Form-Gedächtnis-Legierung beziehungsweise des Stellgliedes bei einer Temperaturerhöhung ohne Krafteinwirkung statt. Bei einer Temperaturverringerung wird dann jedoch eine Kraft, zum Beispiel mittels einer Feder, aufgebracht, um die Formänderung wieder rückgängig zu machen.

Das PTC-Heizelement ist vorzugsweise so ausgebildet, dass eine schnelle Erwärmung der Form-Gedächtnis-Legierung beziehungsweise des Stellgliedes gewährleistet ist. Aufgrund des indirekten Wärmeeintrags ist die PTC-Leistung zu Beginn des Aufheizvorgangs hoch. Sobald die Umwandlungstemperatur überschritten ist, kompensiert das PTC-Element nur noch den Wärmeverlust, um den Arbeitstemperaturbereich in der Hochtemperaturphase zu halten. Für den Aufheizvorgang wird üblicherweise eine Leistung > 20 Watt, für den Haltezustand eine Leistung < 5 Watt benötigt. Die temperaturabhängige Widerstandskennlinie des PTC-Heizelements ist so abgestimmt, das unterhalb der Umwandlungstemperatur (Austenit-Finish-Temperatur oder Austenit-Start-Temperatur) eine Leistung > 20 Watt (> 40 Watt) gewährleistet ist, wobei die Leistung oberhalb stark abnimmt. Der Form-Gedächtnis-Legierung beziehungsweise dem Stellglied wird ab einer Temperatur von 130 °C in Summe keine Wärme mehr zugeführt.

Vorzugsweise ist das Ventil im stromlosen Zustand entweder offen oder geschlossen. Dies wird bspw. durch eine Feder erreicht, die sich bei der Formänderung verkürzt oder ausdehnt, wobei die Art der Formänderung bei der Herstellung der Feder vorgebbar ist.

## Patentansprüche

1. Ventil (1, 20, 40) mit einem Gehäuse (6, 25, 45) mit einem Fluideinlass (7, 26, 46) und einem Fluidauslass (8, 27, 47), wobei der Fluideinlass (7, 26, 46) mit dem Fluidauslass (8, 27, 47) über eine Strömungskammer (9, 28, 48) im Inneren des Gehäuses (6, 25, 45) in Fluidkommunikation steht und der Fluiddurchsatz durch die Strömungskammer (9, 28, 48) durch einen im Inneren des Gehäuses (6, 25) beweglich gelagerten Kolben (2, 21, 41) beeinflussbar ist, wobei an einer ersten Angriffsfläche des Kolbens (2, 21, 41) ein entlang seiner Hauptbewegungsrichtung (9, 29, 49) wirkendes erstes Stellglied (4, 23, 43) angreift und an einer zweiten Angriffsfläche des Kolbens (2, 21, 41) ein entlang der Hauptbewegungsrichtung (9, 29, 49) wirkendes zweites Stellglied (3, 22, 42) angreift, wobei die Wirkrichtung des ersten Stellgliedes (4, 23, 43) und die Wirkrichtung des zweiten Stellgliedes (3, 22, 42) entgegengesetzt sind, und wobei das erste Stellglied (4, 23, 43) aus einer Form-Gedächtnis-Legierung gebildet ist, wobei das Gehäuse (6, 25, 45) ein erstes Heizelement (5, 24, 44) aufweist, welches im Bereich des ersten Stellgliedes (4, 23, 43) im und/oder am Gehäuse (6, 25, 45) angeordnet ist und das erste Stellglied (4, 23, 43) durch das Heizelement (5, 24, 44) erwärmbar ist, **dadurch gekennzeichnet, dass** das Heizelement (5, 24, 44) ein PTC-Heizelement ist und das PTC-Heizelement eine maximale Leistung > 20 Watt besitzt, wobei bei Temperaturen oberhalb der Phasenumwandlungstemperatur der Widerstand stark erhöht ist und bei Temperaturen > 120 °C keine Wärme mehr an das erste Stellglied (4, 23, 43) abgebbar ist.

2. Ventil (1, 20, 40) nach Anspruch 1, **dadurch gekennzeichnet, dass** das erste Stellglied (4, 23, 43) bei einer Erwärmung des Heizelementes (5, 24, 44) in seiner Wirkrichtung ausdehnbar oder verkürzbar ist.

3. Ventil (1, 20, 40) nach einem der vorhergehenden Ansprüche, **dadurch gekennzeichnet, dass** die erste Angriffsfläche und die zweite Angriffsfläche an gegenüberliegenden Seiten des Kolbens (2, 21, 41) angeordnet sind.

4. Ventil (1, 20, 40) nach einem der vorhergehenden Ansprüche, **dadurch gekennzeichnet, dass** der Fluiddurchsatz durch die Strömungskammer (9, 28, 48) durch ein Ausdehnen oder ein Verkürzen des ersten Stellgliedes (4, 23, 43) in seiner Wirkrichtung verringerbar ist.

5. Ventil (1, 20, 40) nach einem der vorhergehenden Ansprüche 1 bis 3, **dadurch gekennzeichnet, dass** der Fluiddurchsatz durch die Strömungskammer (9, 28, 48) durch ein Ausdehnen oder ein Verkürzen des ersten Stellgliedes (4, 23, 43) in seiner Wirkrichtung erhöhbar ist.

6. Ventil (1, 20, 40) nach einem der vorhergehenden Ansprüche, **dadurch gekennzeichnet, dass** der Kolben (2, 31, 41) den Fluiddurchsatz durch die Strömungskammer (9, 28, 48) in einer Position vollständig verhindert.

7. Ventil (1, 20, 40) nach einem der vorhergehenden Ansprüche, **dadurch gekennzeichnet, dass** das erste Stellglied (4, 23, 43) und/oder das zweite Stellglied (3, 22, 42) ein Kraftspeicherelement ist.

## Claims

1. A valve (1, 20, 40) having a housing (6, 25, 45) with a fluid inlet (7, 26, 46) and a fluid outlet (8, 27, 47), wherein the fluid inlet (7, 26, 46) is in fluid communication with the fluid outlet (8, 27, 47) via a flow chamber (9, 28, 48) in the interior of the housing (6, 25, 45) and the fluid throughput through the flow chamber (9, 28, 48) can be influenced by a piston (2, 21, 41) which is movably mounted in the interior of the housing (6, 25), wherein a first actuator (4, 23, 43) acting along its main movement direction (9, 29, 49) contacts a first contact surface of the piston (2, 21, 41) and a second actuator (3, 22, 42) acting along its main movement direction (9, 29, 49) contacts a second contact surface of the piston (2, 21, 41), wherein the direction of action of the first actuator (4, 23, 43) and the direction of action of the second actuator (3, 22, 42) are opposite, and wherein the first actuator (4, 23, 43) is formed from a shape memory alloy, wherein the housing (6, 25, 45) has a first heating element (5, 24, 44) which is arranged inside and/or on the housing (6, 25, 45) in the region of the first actuator (4, 23, 43) and the first actuator (4, 23, 43) can be heated by the heating element (5, 24, 44), **characterised in that** the heating element (5, 24, 44) is a PTC heating element and the PTC heating element has a maximum power of > 20 Watts, wherein the resistance is highly raised in case of temperatures above the phase transition temperature and in case of temperatures of > 120°C, no more heat can be transferred to the first actuator (4, 23, 43).

2. The valve (1, 20, 40) according to claim 1, **characterised in that** the direction of action of the first actuator (4, 23, 43) can be extended or shortened when the heating element (5, 24, 44) is heated.

3. The valve (1, 20, 40) according to one of the preceding claims, **characterised in that** the first contact surface and the second contact surface are arranged on opposite sides of the piston (2, 21, 41).

4. The valve (1, 20, 40) according to one of the preceding claims, **characterised in that** the direction of action of the fluid throughput trough the flow chamber (9, 28, 48) can be reduced by extending or shortening the first actuator (4, 23, 43).

5. The valve (1, 20, 40) according to one of the preceding claims 1 to 3, **characterised in that** the direction of action of the fluid throughput trough the flow chamber (9, 28, 48) can be increased by extending or shortening the first actuator (4, 23, 43).

6. The valve (1, 20, 40) according to one of the preceding claims, **characterised in that** the piston (2, 31, 41) completely prevents the fluid throughput through the flow chamber (9, 28, 48) in one position.

7. The valve (1, 20, 40) according to one of the preceding claims, **characterised in that** the first actuator (4, 23, 43) and/or the second actuator (3, 22, 42) is a power storage element.

## Revendications

1. Soupape (1, 20, 40) comprenant une cage (6, 25, 45) comportant une entrée de fluide (7, 26, 46) et une sortie de fluide (8, 27, 47), où l'entrée de fluide (7, 26, 46) est en communication fluidique, à l'intérieur de la cage (6, 25, 45), avec la sortie de fluide (8, 27, 47) par une chambre d'écoulement (9, 28, 48), et le débit de fluide à travers la chambre d'écoulement (9, 28, 48) peut être influencé par un piston (2, 21, 41) monté en étant mobile à l'intérieur de la cage (6, 25), où un premier actionneur (4, 23, 43), agissant le long de sa direction principale de mouvement (9, 29, 49), vient au contact au niveau d'une première surface de contact du piston (2, 21, 41), et un second actionneur (3, 22, 42), agissant le long de la direction principale de mouvement (9, 29, 49), vient au contact au niveau d'une seconde surface de contact du piston (2, 21, 41), où la direction d'action du premier actionneur (4, 23, 43) et la direction d'action du second actionneur (3, 22, 42) sont en sens opposé l'une par rapport à l'autre, et où le premier actionneur (4, 23, 43) est formé à partir d'un alliage à mémoire de forme, où la cage (6, 25, 45) présente un premier élément chauffant (5, 24, 44) qui, dans la zone du premier actionneur (4, 23, 43), est disposé dans et / ou sur la cage (6, 25, 45), et le premier actionneur (4, 23, 43) peut être chauffé par l'élément chauffant (5, 24, 44), **caractérisée en ce que** l'élément chauffant (5, 24, 44) est un élément chauffant à coefficient de température positif - CTP - et l'élément chauffant CTP a une puissance maximale > 20 watts où, à des températures supérieures à la température de changement de phase, la résistance est fortement augmentée, et à des températures > 120°C, plus aucune chaleur ne peut être fournie au premier actionneur (4, 23, 43).

2. Soupape (1, 20, 40) selon la revendication 1, **caractérisée en ce que**, au cours d'un chauffage de l'élément chauffant (5, 24, 44), le premier actionneur (4, 23, 43) peut devenir plus long ou plus court dans sa direction d'action.

3. Soupape (1, 20, 40) selon l'une des revendications précédentes, **caractérisée en ce que** la première surface de contact et la seconde surface de contact sont disposées sur des côtés opposés du piston (2, 21, 41).

4. Soupape (1, 20, 40) selon l'une quelconque des revendications précédentes, **caractérisée en ce que** le débit de fluide à travers la chambre d'écoulement (9, 28, 48) peut être réduit par un allongement ou par un raccourcissement du premier actionneur (4, 23, 43) dans sa direction d'action.

5. Soupape (1, 20, 40) selon l'une quelconque des revendications 1 à 3, **caractérisée en ce que** le débit de fluide à travers la chambre d'écoulement (9, 28, 48) peut être augmenté par un allongement ou par un raccourcissement du premier actionneur (4, 23, 43) dans sa direction d'action.

6. Soupape (1, 20, 40) selon l'une quelconque des revendications précédentes, **caractérisée en ce que** le piston (2, 31, 41), dans une position, empêche complètement le débit de fluide à travers la chambre d'écoulement (9, 28, 48).

7. Soupape (1, 20, 40) selon l'une quelconque des revendications précédentes, **caractérisée en ce que** le premier actionneur (4, 23, 43) et / ou le second actionneur (3, 22, 42) est un élément accumulateur de force.
